## Europäisches Patentamt

## European Patent Office

## Office européen des brevets

(19)

(11) Veröffentlichungsnummer: **0 209 189**
**B1**

(12) # EUROPÄISCHE PATENTSCHRIFT

(45) Veröffentlichungstag der Patentschrift:
**21.06.89**

(51) Int. Cl.⁴: **H02M 3/28**

(21) Anmeldenummer: **86201195.4**

(22) Anmeldetag: **08.07.86**

(54) Anordnung zur Synchronisation der pulsbreitenmodulierten Schalttakte mehrerer getakteter Gleichspannungswandler.

(30) Priorität: **11.07.85 DE 3524768**

(43) Veröffentlichungstag der Anmeldung:
**21.01.87 Patentblatt 87/4**

(45) Bekanntmachung des Hinweises auf die Patenterteilung:
**21.06.89 Patentblatt 89/25**

(84) Benannte Vertragsstaaten:
**CH DE FR GB LI SE**

(56) Entgegenhaltungen:
**WO-A-87/00701**
**DE-A- 3 223 179**

(73) Patentinhaber: **Philips Patentverwaltung GmbH,
Wendenstrasse 35 Postfach 10 51 49,
D-2000 Hamburg 1(DE)**

(84) Benannte Vertragsstaaten: **DE**

(73) Patentinhaber: **N.V. Philips' Gloeilampenfabrieken,
Groenewoudseweg 1, NL-5621 BA Eindhoven(NL)**

(84) Benannte Vertragsstaaten: **CH FR GB LI SE**

(72) Erfinder: **Lösel, Walter, Anemonenweg 11,
D-8510 Fürth/Vach(DE)**
Erfinder: **Kohler, Gerd, Tellstrasse 4,
D-8500 Nürnberg 10(DE)**

(74) Vertreter: **Peuckert, Hermann, Dipl.-Ing. et al, Philips
Patentverwaltung GmbH
Wendenstrasse 35 Postfach 10 51 49,
D-2000 Hamburg 1(DE)**

## Beschreibung

Die Erfindung betrifft eine Anordnung zur Synchronisation der pulsbreitenmodulierten Schalttakte mehrerer getakteter Gleichspannungswandler, die je eine Regelschaltung mit einem eigenen Oszillator enthalten, und jede Regelschaltung einen ersten Anschluß für einen Kondensator und einen zweiten Anschluß für einen Widerstand zur Festlegung der Frequenz des Oszillators aufweist, wobei an einem dritten Anschluß der Regelschaltung der pulsbreitemodulierte Schalttakt zum Ansteuern des Schalttransistors anliegt, sowie an einem vierten Anschluß ein Puls anliegt, der zum pulsbreitenmodulierten Schalttakt um 180° phasenverschoben ist.

Eine Schaltungsanordnung zur Synchronisation der pulsbreitenmodulierten Schalttakte mehrerer getakteter Gleichspannungswandler ist aus der DE-OS 32 23 179 bekannt. Bei der bekannten Anordnung ist die Einheit, die einen pulsbreitenmodulierten Schalttakt liefert, von außen durch ein Taktsignal mit geeigneter Frequenz und einem Taktverhältnis von 1/2 anzusteuern. Die Synchronisation der pulsbreitenmodulierten Schalttakte mehrerer getakteter Gleichspannungswandler wird nach der DE-OS 32 23 179 daher so vorgenommen, daß alle Gleichspannungswandler mit dem Taktsignal des gleichen Taktgenerators versorgt werden. Da alle Gleichspannungswandler an die gleiche Primärspannungsquelle angeschlossen sind - dieser Fall wird im folgenden immer unterstellt - führt die Synchronisation aller Gleichspannungswandler in der geschilderten Weise zu hohen Spitzenbelastungen der Primärspannungsquelle z.B. während der ersten Halbperiode des Taktsignales. Um die Spitzenbelastung abzubauen, wird entsprechend der DE-OS 32 23 179 ein Teil aller Gleichspannungswandler mit dem direkten Taktsignal und ein anderer Teil mit dem invertierten Taktsignal des Taktgenerators versorgt. Auf diese Weise wird die Belastung der Primärspannungsquelle auf beide Halbperioden des Taktsignales etwa gleichmäßig verteilt. Die auf diese Weise synchronisierten pulsbreitenmodulierten Schalttakte zweier beliebiger Gleichspannungswandler haben dann entweder keine Phasenverschiebung (Zeitverschiebung) oder die Phasenverschiebung 180° zueinander.

Werden die einzelnen Gleichspannungswandler mit handelsüblichen Steuerbausteinen - im folgenden Regelschaltungen genannt - ausgerüstet (gedacht ist insbesondere an die Bausteine TDA 4714 und TDA 4716), so ergeben sich wegen des speziellen Aufbaus dieser Regelschaltungen Probleme, wenn mehrere Gleichspannungswandler mit der wahlweisen Phasenschiebung von 0° oder 180° synchronisiert werden sollen:

Die Regelschaltungen enthalten zwei Anschlüsse, von denen einer mit einem Widerstand und der andere mit einem Kondensator beschaltet werden muß, um die Frequenz des internen Oszillators der Regelschaltung festzulegen. Würde jede Regelschaltung so beschaltet, daß alle mit der gleichen nominellen Frequenz arbeiten, so wäre zwar wegen des unabhängigen Laufes der Regelschaltungen bzw. der Gleichspannungswandler voneinander das Problem der hohen Spitzenbelastung gelöst, jedoch entstünden wegen der unvermeidbaren Abweichungen von der nominellen Frequenz Modulationsprodukte, die sich über die Leitung zur Primärspannungsquelle fortpflanzen und andere, an die Primärspannungsquelle angeschlossenen Verbraucher stören würden. Diese Modulationsprodukte müßten mit aufwendigen Filtermitteln unterdrückt werden. Schließlich sei noch vermerkt, daß die Hersteller der oben angegebenen Regelschaltungen keine Möglichkeit für die Synchronisation mehrerer Regelschaltungen vorgesehen haben.

Der Erfindung liegt daher die Aufgabe zugrunde, eine Anordnung zur Synchronisation der pulsbreitenmodulierten Schalttakte mehrerer Gleichspannungswandler anzugeben, die mit den oben näher charakterisierten Regelschaltungen ausgerüstet sind, und bei der die Phasenverschiebung zwischen zwei beliebigen Schalttakten wahlweise 0° und 180° betragen kann.

Diese Aufgabe wird dadurch gelöst, daß die ersten Anschlüsse der Regelschaltungen aller Gleichspannungswandler an einen gemeinsamen Kondensator angeschlossen sind und daß mindestens einer der zweiten Anschlüsse mit einem individuellen Widerstand versehen ist,

daß der pulsbreitenmodulierte Schalttakt und der um 180° phasenverschobene Puls einer ersten Regelschaltung jeweils an einen Eingang einer logischen Schaltung geleitet sind,

daß mit einem nachgeschalteten ersten Flip-Flop der unmodulierte Schalttakt mit dem Tastverhältnis 1/2 gewonnen wird,

daß für jede weitere Regelschaltung eine Entscheiderschaltung mit drei Eingängen und einem Ausgang vorgesehen ist,

daß ein Ausgang des ersten Flip-Flops mit dem ersten Eingang und daß der dritte und vierte Anschluß mit den beiden anderen Eingängen der zugeordneten Entscheiderschaltung verbunden sind und daß die Entscheiderschaltung die aus einem ersten und einem zweiten asynchronen Flip-Flop, aus einem ODER-Gralter und zwei Verzögerungsgliedern besteht, denjenigen Puls vom dritten oder vierten Anschluß der Regelschaltung an ihren Ausgang weiterleitet, bei dem die Einschaltzeiten für den zugeordneten Schalttransistor in eine vorbestimmte Halbperiode des Schalttaktes der ersten Regelschaltung fallen.

Vorteilhafte Ausgestaltungen der Erfindung sind in den Unteransprüchen angegeben. Anhand der Figuren soll ein bevorzugtes Ausführungsbeispiel der Erfindung näher erläutert werden.

Fig. 1 zeigt den Schaltplan des bevorzugtes Ausführungsbeispieles und

Fig. 2 zeigt Impuls-Zeit-Diagramme zur Funktionserläuterung.

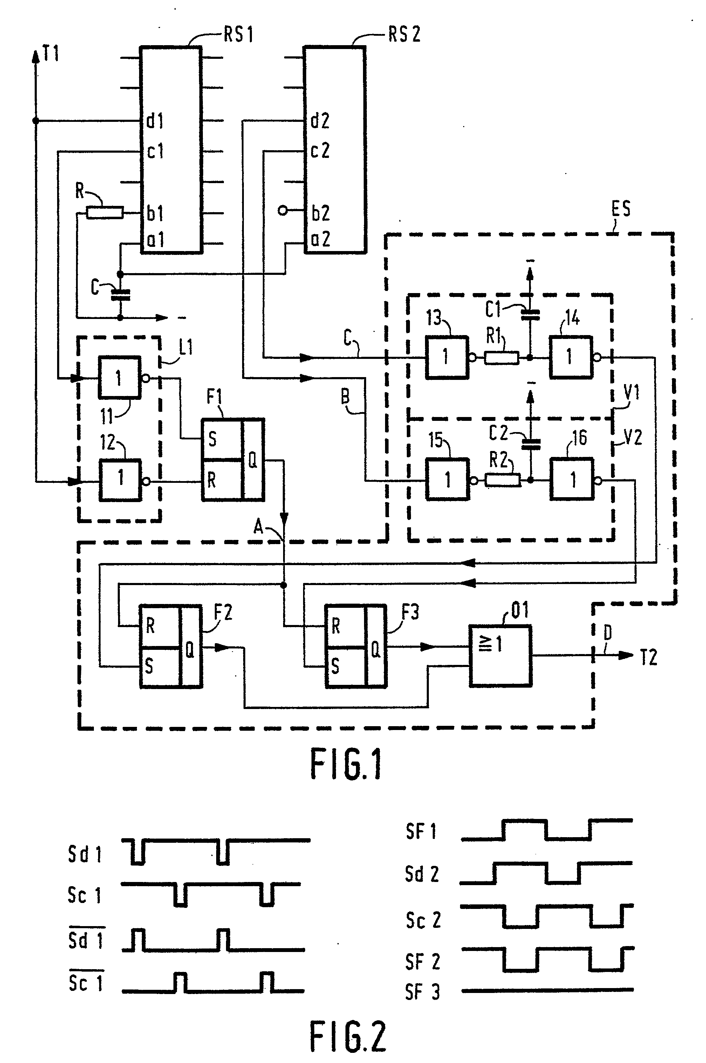

Im Beispiel nach der Fig. 1 werden die Schalttakte zweier Gleichspannungswandler miteinander synchronisiert. Die Fig. 1 zeigt nur die für die Erfindung wesentlichen Bestandteile der beiden Gleichspannungswandler. RS1 und RS2 sind die Regelschaltungen der Gleichspannungswandler; a1, b1, c1 und d1

sind die für die Erfindung bedeutungsvollen Anschlüsse der Regelschaltung RSI und a2, b2, c2 und d2 die entsprechenden Anschlüsse der Regelschaltung RS2. Die Anschlüsse al und a2, die bei individueller Frequenzeinstellung kapazitiv beschaltet werden müssen, sind miteinander verbunden; zusätzlich liegt ein Kondensator C zwischen dem Anschluß al und dem negativen Pol einer Versorgungsspannungsquelle. Der Anschluß bl, der bei individueller Frequenzeinstellung mit einem Widerstand beschaltet werden soll, ist über einen Widerstand R ebenfalls mit dem negativen Pol der Versorgungsspannungsquelle verbunden, während der entsprechende Anschluß b2 der Regelschaltung RS2 unbeschaltet bleibt. Mit diesen Maßnahmen ist der Gleichlauf der internen Oszillatoren gesichert; ihre Frequenz ist durch den Wert des Widerstandes R und dem der Kapazität C festgelegt. Die Beschaltung des Anschlusses b2 mit einem Widerstand würde die gleiche Wirkung haben, wie wenn dieser Widerstand zum Widerstand R parallel geschaltet würde.

Der Gleichlauf der internen Oszillatoren garantiert jedoch nicht die Phasengleichheit der als Schalttakte verwendbaren Pulse, die an den einander entsprechenden Anschlüssen dl, d2 bzw. cl, c2 der Regelschaltung RSI und RS2 anliegen. Vielmehr hängt es vom Zufall ab, ob z.B. die an den Anschlüssen dl und d2 anliegenden Pulse die Phasenverschiebung 0° oder l80° haben. Die folgenden Ausführungen erläutern die Maßnahmen, die auch eine definierte Phasenverschiebung garantieren.

Der am Anschluß cl liegende pulsbreitenmodulierte Takt ist gegenüber dem am Anschluß dl anliegenden Puls um l80° phasenverschoben, entsprechendes gilt für die Anschlüsse d2 und c2. Bei der Regelschaltung RSI wird der am Anschluß dl anliegende Puls als pulsbreitenmodulierter Schalttakt verwendet und dem nicht eingezeichneten Transistor Tl zugeführt. Der Schalttakt Sdl, von dem in Fig. 2 ein zeitlicher Ausschnitt gezeigt ist, wird nun als die Bezugstakt verwendet. Die Regelschaltung RSI kann daher als Master und die Regelschaltung RS2 als Slave bezeichnet werden. Der am Anschluß cl anliegende Puls ist in Fig. 2 mit Scl bezeichnet; gezeigt ist der gleiche Zeitausschnitt wie beim Schalttakt Sdl. Die entsprechenden Signale der Regelschaltung RS2 sind in Fig. 2 mit Sd2 bzw. Sc2 bezeichnet.

Die Informationen über die Einschaltzeiten der zugehörigen Schalttransistoren Tl und T2 sind bei den Pulsen Sdl, Scl, Sd2 und Sc2 in ihren Zuständen mit dem Binärwert null enthalten.

Durch eine Logik Ll, die aus zwei Invertern ll und l2 besteht, werden die Pulse Sdl und Scl zunächst invertiert und als Signale Sd1 und Sc2 dem R-bzw. S-Eingang eines Flip-Flops Fl zugeführt. Am Q-Ausgang des Flip-Flops Fl liegt das Signal SFl an, das - wie auch Fig. 2 zeigt - den unmodulierten Schalttakt mit dem Tastverhältnis l/2 darstellt. Das Signal SFl wird an den Eingang A einer Entscheiderschaltung ES geleitet. Über zwei weitere Eingänge B und C erhält die Entscheiderschaltung ES auch die Signale Sd2 und Sc2. Von diesen beiden Signalen gibt die Entscheiderschaltung ES dasjenige an ihren Ausgang D und damit an den Schalttransistor T2 weiter, das den Binärwert null in der Halbperiode annimmt, in der der unmodulierte Schalttakt SFl den Binärwert eins annimmt.

Erreicht wird diese Wirkung durch zwei asynchrone R-S-Flip-Flops F2 und F3, deren R-Eingänge mit dem Q-Ausgang des Flip-Flops Fl verbunden sind. Dem S-Eingang des Flip-Flops F2 wird das durch ein Verzögerungsglied Vl verzögerte Signal Sc2 und dem S-Eingang des asynchronen FlipFlops F3 das durch ein Verzögerungsglied V2 verzögerte Signal Sd2 zugeführt. Die Verzögerung durch die Verzögerungsglieder Vl, V2 ist notwendig, damit die asynchronen Flip-Flops F2, F3 mit Sicherheit definierte Zustände annehmen.

Am Q-Ausgang des asynchronen Flip-Flops F2 liegt das Signal SF2 und am Q-Ausgang des asynchronen Flip-Flops F3 das Signal SF3 an. Ein ODER-Gatter Ol verknüpft beide Signale und leitet die Verknüpfung zum nicht gezeigten Transistor T2 des zweiten Gleichspannungswandlers weiter.

Ein Vergleich der Signale Sdl, SFl und SF2 - letzteres ist auch das Signal am Ausgang D - zeigt, daß im vorliegenden Beispiel die Phasenverschiebung zwischen den Schalttakten des ersten und des zweiten Wandlers l80° beträgt. Soll eine Phasenverschiebung von 0° erreicht werden, so ist lediglich der ♠-Ausgang des Flip-Flops Fl mit den R-Eingängen der asynchronen Flip-Flops F2 und F3 zu verbinden.

Die Verzögerungsglieder Vl und V2 bestehen jeweils aus einem vorgeschalteten Inverter l3 bzw. l5, einem R-C-Verzögerungsglied Rl, Cl bzw. R2, C2 und einem nachgeschalteten Inverter l4 bzw. l6.

## Patentansprüche

l. Anordnung zur Synchronisation der pulsbreitenmodulierten Schalttakte mehrerer getakteter Gleichspannungswandler, die je eine Regelschaltung (R5l, R52) mit einem eigenen Oszillator enthalten, wobei jede Regelschaltung einen ersten Anschluß (a) für einen Kondensator (c) und einen zweiten Anschluß (b) für einen Widerstand (R) zur Festlegung der Frequenz des Oszillators aufweist, und an einem dritten Anschluß (c) der Regelschaltung der pulsbreitenmodulierte Schalttakt zum Ansteuern des Schalttransistors anliegt, sowie an einem vierten Anschluß (d) ein Puls anliegt, der zum pulsbreitenmodulierten Schalttakt um l80° phasenverschoben ist,
dadurch gekennzeichnet,
daß die ersten Anschlüsse (al, a2) der Regelschaltungen (RSI, RS2) aller Gleichspannungswandler an einen gemeinsamen Kondensator (C) angeschlossen sind und daß mindestens einer der zweiten Anschlüsse (bl, b2) mit einem individuellen Widerstand (R) versehen ist,
daß der pulsbreitenmodulierte Schalttakt und der um l80° phasenverschobene Puls einer ersten Regelschaltung (RSI) jeweils an einen Eingang einer logischen Schaltung (Ll) geleitet sind,
daß mit einem nachgeschalteten ersten Flip-Flop (Fl) der unmodulierte Schalttakt mit dem Tastverhältnis l/2 gewonnen wird,
daß für jede weitere Regelschaltung (RS2) eine Entscheiderschaltung (ES) mit drei Eingängen (A, B, C) und einem Ausgang (D) vorgesehen ist, daß ein Ausgang des ersten Flip-Flops (Fl) mit dem ersten Eingang (A) und daß der dritte und vierte Anschluß (c2, d2) der weiteren Regelschaltung (RS2) mit den beiden anderen Eingängen (B, C) der zugeordneten Entscheiderschaltung (ES) verbunden sind und daß die Entscheiderschaltung (ES), die aus einem ersten und einem zweiten asynchronen Flip-Flop (F2, F3), aus einemm ODER-Cralter (01) und zwei Verzögerungsgliedern (V1, V2) besteht, denjenigen Puls vom dritten (c2) oder vierten (d2) Anschluß der weiteren Regelschaltung (RS2) an ihren Ausgang (D) weiterleitet, bei dem die Einschaltzeiten für den zugeordneten Schalttransistor (T2) in eine vorbestimmte Halbperiode des Schalttaktes der ersten Regelschaltung (RSI) fallen.

2. Anordnung nach Anspruch I, dadurch gekennzeichnet, daß die erste logische Schaltung (LI) aus zwei Invertern (II, I2) besteht und daß der Ausgang des ersten Inverters (II) mit dem R-Eingang und der Ausgang des zweiten Inverters (I2) mit dem S-Eingang des ersten Flip-Flops (FI) verbunden ist.

3. Anordnung nach Anspruch I, dadurch gekennzeichnet, daß die erste logische Schaltung aus einem NOR-Gatter besteht, dessen Ausgang mit dem Takteingang eines rückgekoppelten D-Flip-Flops verbunden ist.

4. Anordnung nach Anspruch I, dadurch gekennzeichnet, daß der erste Eingang (A) der Entscheiderschaltung von den miteinander verbundenen R-Eingängen der beiden asynchronen Flip-Flops (F2, F3) gebildet wird, daß der zweite und dritte Eingang (B, C) der Entscheiderschaltung von einem Anschluß jeweils eines Verzögerungsgliedes gebildet wird und daß der zweite Anschluß des einen Verzögerungsgliedes (VI) mit dem S-Eingang des ersten (F2) und der zweite Anschluß des anderen Verzögerungsgliedes (V2) mit dem S-Eingang des zweiten asynchronen Flip-Flops (F3) verbunden ist, und daß die Eingänge des ODER-Gatters (OI) mit jeweils einem Ausgang (Q) der asynchronen Flip-Flops (F2, F3) verbunden sind und daß der Ausgang (D) der Entscheiderschaltung (ES) vom Ausgang des ODER-Gatters (OI) gebildet wird.

5. Anordnung nach Anspruch I, dadurch gekennzeichnet, daß die Entscheiderschaltung (ES) aus einem NOR-Gatter und einem UND-Gatter besteht, daß der Ausgang des NOR-Gatters mit einem Eingang des UND-Gatters verbunden ist, daß der erste Eingang (A) der Entscheiderschaltung (ES) von dem anderen Eingang des UND-Gatters gebildet wird, daß ihr (ES) zweiter und dritter Eingang (B, C) von den beiden Eingängen des NOR-Gatters und daß ihr (ES) Ausgang (D) vom Ausgang des UND-Gatters gebildet wird.

## Claims

1. An arrangement for synchronizing the PWM clock signales of several clocked direct voltage converters, each of which comprising a control circuit (RS1, RS2) having an individual oscillator, each control circuit having a first connection (a) for a capacitor (C) and a second connection (b) for a resistor (R) for defining the frequency of the oscillator, the PWM clock signal for driving the switching transistor being present at a third connection (c) of the control circuit and a pulse shifted in phase by 180° with respect to the PWM clock signal being present at a fourth connection (d), characterized in that the first connections (a1, a2) of the control circuit (RS1, RS2) of all the direct voltage converters are coupled to a common capacitor (C) and at least one of the second connections (b1, b2) is provided with an individual resistor (R), in that the PWM clock signal and the pulse shifted in phase by 180° of a first control circuit (RS1) are each time applied to an input means of a logic circuit (L1), in that the unmodulated clock signal having a duty cycle of 50% is obtained by means of a subsequent first flip-flop (F1), in that for each further control circuit (RS2) there is a decision circuit (ES) having three inputs (A, B, C) and an output means (D) connecting an output of the first flip-flop (F1) to the first input (A) and the third and fourth connections (c2, d2) of the further control circuit (RS2) to the two other inputs (B, C) of the associated decision circuit (ES), and in that the decision circuit (ES), which comprises a first and a second asynchronous flip-flop (F2, F3), an OR-gate (01) and two delay elements (V1, V2), passes that pulse from the third (c2) or fourth connection (d2) of the further control circuit (RS2) to its output (D), in which the transient times for the associated switching transistor (T2) fall within a predetermined half cycle of the switching clock of the first control circuit (RS1).

2. An arrangement as claimed in Claim 1, characterized in that the first logic circuit (L1) comprises two inverters (11, 12) and in that the output of the first inverter (11) is connected to the R input and the output of the second inverter (12) is connected to the S input of the second inverter (12) is connected to the S input of the first flip-flop (F1).

3. An arrangement as claimed in Claim 1, characterized in that the first logic circuit comprises a NOR gate, whose output is connected to the clock input of a D flip-flop which is fed back.

4. An arrangement as claimed in Claim 1, characterized in that the first input (A) of the decision circuit is constituted by the interconnected R inputs of the two asynchronous flip-flops (F2, F3) in that the second and third inputs (B, C) of the decision circuit are constituted by a connection of a respective delay element and in that the second connection of one delay element (V1) is connected to the S input of the first (F2) and the second connection of the other delay element (V2) is connected to the S input of the second asynchronous flip-flop (F3), in that the inputs of the OR gate (01) are connected each to an output (Q) of the asynchronous flip-flops (F2, F3), and in that the output (D) of the decision circuit (ES) is constituted by the output of the OR gate (01).

5. An arrangement as claimed in Claim 1, characterized in that the decision circuit (ES) comprises a NOR gate and an AND gate, in that the output of the NOR gate is connected to an input of the AND gate, in that the first input (A) of the decision circuit (ES) is constituted by the other input of the AND gate, in that its (ES) second and third inputs (B, C) are constituted by the two inputs of the NOR gate and in that its (ES) output (D) is constituted by the output of the AND gate.

## Revendications

1. Montage pour la synchronisation des impulsions d'horloge de commutation modulées en largeur de plusieurs convertisseurs à courant continu à commutation qui contiennent chacun un circuit de régulation (RS1, RS2) à oscillateur propre, dans lequel chaque circuit de régulation comporte une première connexion (a) destinée à un condensateur (C), et une deuxième connexion (b) destinés à une résistance (R), en vue de la fixation de la fréquence de l'oscillateur, et l'impulsion d'horloge de commutation modulée en largeur, est présente sur une troisième connexion (c) du circuit de régulation pour activer le transistor de commutation, tandis qu'une impulsion déphasée de 180° par rapport à l'impulsion d'horloge de commutation modulée en largeur est présente sur une quatrième connexion (d), caractérisé en ce que les premières connexions (a1, a2) des circuits de régulation (RS1, RS2) de tous les convertisseurs à courant continu sont connectées à un condensateur (C) commun et qu'au moins une des deuxièmes connexions (b1, b2) est pourvue d'une résistance (R) individuelle,

que l'impulsion d'horloge de commutation modulée en largeur et l'impulsion déphasée de 180° d'un premier circuit de régulation (RS1) sont chaque fois amenées à une entrée d'un circuit logique (L1),

qu'au moyen d'une première bascule bistable (F1) montée en aval, l'impulsion d'horloge de commutation non modulée présentant le taux d'impulsions 1/2 est obtenue,

que pour chaque autre circuit de régulation (RS2) est prévu un circuit de décision (ES) comportant trois entrées (A, B, C) et une sortie (D), qu'une sortie de la première bascule bistable (F1) est connectée à la première entrée (A), et que la troisième et la quatrième connexion (c2, d2) de l'autre circuit de régulation (RS2) sont connectées aux deux autres entrées (B, C) du circuit de décision (ES) associé, et que le circuit de décision (ES), qui est constitué d'une première et d'une deuxième bascule bistable asynchrone (F2, F3), d'un circuit-porte OU (01) et de deux éléments à retard (V1, V2), conduit jusqu'à sa sortie (D) celle des impulsions de la troisième (c2) ou de la quatrième (d2) connexion de l'autre circuit de régulation (RS2) pour laquelle les temps de passage à la fermeture pour le transistor de commutation (T2) associé tombent dans une alternance prédéterminée de l'impulsion d'horloge de commutation du premier circuit de régulation (RS1).

2. Montage suivant la revendication 1, caractérisé en ce que le premier circuit-logique (L1) est constitué de deux inverseurs (11, 12) et que la sortie du premier inverseur (11) est connectée à l'entrée (S) et la sortie du deuxième inverseur (12) à l'entrée (R) de la première bascule bistable (F1).

3. Montage suivant la revendication 1, caractérisé en ce que le premier circuit logique est constitué d'un circuit-porte NON-OU dont la sortie est connectée à l'entrée d'impulsions d'horloge d'une bascule bistable (D) à couplage par réaction.

4. Montage suivant la revendication 1, caractérisé en ce que la première entrée (A) du circuit de décision est formée par les entrées (R) interconnectées des deux bascules bistables asynchrones (F2, F3), que la deuxième et la troisième entrée (B, C) du circuit de décision sont chacune formées par une connexion d'un élément à retard et que la deuxième connexion de l'élément à retard (VI) est connectée à l'entrée (S) de la première bascule bistable asynchrone (F2), et la deuxième connexion de l'autre élément à retard (V2) à l'entrée (S) de la deuxième bascule bistable asynchrone (F3), que les entrées de circuit-porte OU (01) sont chacune connectées à une sortie (Q) d'une bascule bistable asynchrone (F2, F3) et que la sortie (D) du circuit de décision (ES) est formée par la sortie du circuit-porte OU (01).

5. Montage suivant la revendication 1, caractérisé en ce que le circuit de décision (ES) est constitué d'un circuit-porte NON-OU et d'un circuit-porte ET, que la sortie du circuit-porte NON-OU est connectée à une entrée du circuit-porte ET, que la première entrée (A) du circuit de décision (ES) est formée par l'autre entrée du circuit-porte ET et que ses (ES) deuxième et troisième entrée (B, C) sont formées par les deux entrées du circuit-porte NON-OU et sa sortie (D) par la sortie du circuit-porte ET.

FIG.1

FIG.2